# EUROPEAN PATENT APPLICATION

(11) **EP 4 206 027 A1**
(43) Date of publication of application: **05.07.2023**
(21) Application number: 22213337.3
(22) Date of filing: 14.12.2022
(51) Int. Cl.: B60L 53/12, B60L 55/00, B60L 58/16, B60L 58/22, H02J 50/10, H02J 50/40, B60L 7/10, H02J 3/32, H02J 7/00, B60L 58/20, B60L 58/21

(54) **MULTICOIL INDUCTIVE ELECTRIC VEHICLE CHARGING SYSTEM**

(30) Priority: 01.01.2022 US 202263295862 P; 30.11.2022 US 202218071925
(71) Applicant: Powermat Technologies Ltd., 4970602 Petach Tikva (IL)
(72) Inventor: SHERMAN, Itay, 4970602 Petach Tikva (IL)
(74) Representative: Maiwald GmbH

(57) **Abstract**

A system is provided herein. The system includes modules of an electric vehicle and a power receiver of the electric vehicle. The power receiver includes receiving coils and a controller. Each of the receiving coils directly and separately connects to a separate one of the modules. The controller monitors currents to and from each of the modules and modifies operation points of each of the modules by changing frequency or duty cycle to achieve a target current.

## Description

### CROSS REFERENCE TO RELATED APPLICATIONS

This application claims priority from U.S. Provisional Patent Application No. 63/295,862, entitled "MULTI COIL INDUCTIVE CHARGING SYSTEM FOR EVS," filed on January 01, 2022, which is hereby incorporated by reference as if set forth in full in this application for all purposes.

### BACKGROUND

The electric vehicle (EV) industry is rapidly growing. Generally, EVs use rechargeable batteries (e.g., lithium-ion based batteries) to provide power to electric motors of the EVs. These rechargeable batteries require frequent recharge.

Currently, conventional wired charger technologies provide charging currents to the rechargeable batteries. These conventional wired charger technologies are grouped by class. Lower class charging technologies use household one or three phase alternating current (AC) sources. In turn, onboard chargers of the EVs convert AC voltage to direct current (DC) voltage (e.g., 400 Volts) to charge a whole battery pack of the rechargeable batteries. Higher class DC charging technologies use offboard chargers of charging stations that provide DC voltage to directly charge the whole battery pack of the rechargeable batteries. Note that the whole battery pack of the rechargeable batteries can be multiple modules connected in series. Each module can include multiple cells connected in parallel and/or in series. In some cases, different modules are available; from 24 Volts to 100 Volts per module for different voltage levels.

Connections of multiple cells pose problems, as the multiple cells need to be balanced to achieve optimum life time and capacity. Conventional EV charging systems can perform balancing at a cell, module, and/or on pack level via balancing circuits. For example, conventional EV charging systems utilize active balancing circuits that include DC to DC converters that pump extra current from specific cells to a remainder of the cells. Balancing circuits add complexity, costs, and contribute to power loss. Thus, there is a need for an efficient power charging design.

### SUMMARY

According to one or more embodiments, a system is provided herein. The system includes modules of an electric vehicle and a power receiver of the electric vehicle. The power receiver includes receiving coils and a controller. Each of the receiving coils directly and separately connects to a separate one of the modules. The controller monitors currents to and from each of the modules and modifies operation points of each of the modules by changing frequency or duty cycle to achieve a target current. According to one or more embodiments, the above system can be implemented as a method, an apparatus, and/or a computer program product. According to one embodiment, a system is provided comprising any of the modules disclosed herein and comprises any of the coils described herein. According to one embodiment, a system is provided comprising any of the chargers disclosed herein and comprises any of the servers described herein.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 depicts a system in accordance with one or more embodiments;
FIG. 2 depicts a system in accordance with one or more embodiments; and
FIG. 3 depicts a method in accordance with one or more embodiments.

### DETAILED DESCRIPTION

Embodiments disclosed herein may include apparatuses, systems, methods, and/or computer program products for an efficient power charging design (e.g., a multi-coil inductive EV charging system) that wirelessly transfers power between rechargeable batteries of an EV and a charging station.

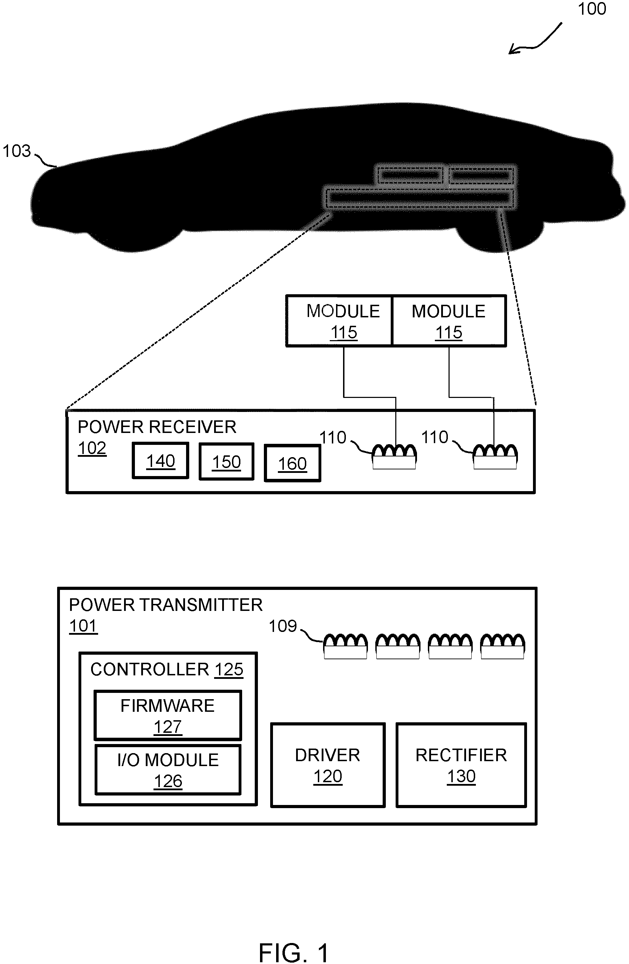

FIG. 1 shows a system 100 (e.g., the wireless power system) in accordance with one or more embodiments. The system 100 implements optimum balanced charging in a charging process. While single items are shown of an element or item of the system 100, any single element or items can be representative of multiple elements or items.

The system includes wireless power devices 101 and 102 respective to an EV 103. For ease of explanation, and without particularly limiting the functions of the wireless power devices 101 and 102, these devices 101 and 102 are referred herein, such as a power transmitter 101 or Tx 101 and a power receiver 102 or Rx 102, respectively. The Tx 101 and the Rx 102 include circuitry (i.e., capacitors, resistors, gates, grounds, control lines, detection lines, sensing circuits, feedback circuitry, etc.) for transmitting, receiving, and storing the electromagnetic energy, which is provided to a load. The Tx 101 and the Rx 102 can include and use multiple Tx and Rx coils 109 and 110. The load can be a single instance or any combination of electronic components, such as the one or more one or more battery packs (e.g., rechargeable batteries of the EV 103 represented by one or more modules 115), as well as other circuit components. The one or more modules 115, by way of an example, are a sub-assembly of the overall EV battery that include multiple battery cells and packs, where each module has a physical connecter that enables charging and discharging of the battery packs in that module.

According to one or more embodiments, the Tx 101 can be any apparatus or device (e.g., a charging station) that can generate electromagnetic energy from, for example, an AC power source to a space around the Tx 101 that is used to provide power to the Rx 102 of the EV 103. The Rx 102 can be any device that can receive, use, and/or store the electromagnetic energy when present in the space around the Tx 101. According to one or more embodiments, the Rx can be designed to operate as transmitter and receiver.

As noted, the Tx 101 and the Rx 102 include and use multiple Tx and Rx coils 109 and 110. According to one or more embodiments, a coil setup of the system 100 is designed to ensure a reasonable coupling between the Rx coils 110 when the EV 103 is not docked above a dedicated multi coil charger. The multi coil design of the system supports a reduction of the coupling between the Rx coils 110 and achieving coupling between the individual Rx and Tx coil pairs. Each of the Tx and Rx coils 109 and 110 can be operated as inductive/resonant coupled coils. Note that the Rx 102 can have a similar or the same component structure as the Tx 101, and vice versa (e.g., both of the wireless power devices 101 and 102 can include similar electrical and provide similar functionality based on a particular operation of the system 100).

By way of example, the Rx 102 can be configured to provide the electromagnetic energy to the one or more modules 115. Each module 115, as noted herein, can include battery packs of rechargeable battery cells. The one or more modules 115 can operate in one or more modes of operation (e.g., a Rx mode or a TX mode), as needed, to control power transfer to and therefrom. The Tx 101 may include a driver 120, a controller 125, (which further includes an input/output (I/O) module 126 and firmware 127), and a rectifier 130. The Rx 102 may include a driver 140, a controller 150 (which includes firmware as well, not shown), and a rectifier 160. Note that multiple signal, control, and detection lines connect the components within the Tx 101 and the Rx 102; however, for ease of display, these signal, control and detection lines are omitted.

The Tx and Rx coils 109 and 110 can include standard electrical wiring copper wires folded and/or Litz wires. By way of example, the Rx coil 110 can include an inductor driven by the driver 140 and the rectifier 160, which is controlled by the controller 150. Thus, the Rx coils 110 can inductively couple to Tx coils 109. For example, the Rx coil 110 and a resonant capacitor of the Rx 102 provide an LC circuit for generating an inductive current in accordance with operations of the rectifier 160 and the controller 150 to support power transmissions (e.g., interact with a magnetic field of the Tx 101 to wirelessly obtain induced power that charges the one or more modules 115). Further, the rectifier 160, the Rx coils 110, and/or the resonant capacitor can be considered a resonance circuit of the Rx 102.

The drivers 120 and 140 can be based on commercially available electronic device designed to operate and trigger actions of the rectifier 130 in a precise way, based on signals of the controller 125. According to one or more embodiments, the driver 140 of the Rx 102 can include full bridge or half bridge driver that can control a power transfer by frequency modulation, duty cycle modulation, or both, such as in accordance with commands of the controller 150.

The rectifiers 130 and 160 can be based on commercially available half-wave rectification, full-wave rectification, field-effect transistor (FET) based full-wave rectification, any combination thereof, etc. For example, the rectifier 130 can be any rectifier using one or more components, such as four diodes (e.g., asynchronous rectifier), two didoes and two FETs (half synchronous), four FETs (synchronous), and/or two capacitors and two switches, that are controlled by either a dedicated logic circuit or the controller 125 and driven by the driver 120. For instance, the rectifiers 130 and 160 can be four diode bridges with or without four FETs.

According to one or more embodiments, the Rx 102 includes the rectifier 160 that can also operate as the driver 140. For example, the rectifier 140 of the Rx 102 can be a full wave rectifier that can operate as a full bridge driver. Circuitry of the Rx 102 may also be implemented to perform voltage and or current doubling. The voltage doubling of the Rx 102 can be achieved by using two (2) rectifier capacitors, each storing energy from half of an AC cycle (which is in contrast to conventional doubling that uses two (2) rectifier inductors, where each is current charged at half of the AC cycle).

The controllers 125 and 150 can include a sensing circuits, circuitry, and/or software, for controlling, detecting, and sensing voltage, current, or other features of the Tx 101 and the Rx 102, respectively. The controllers 125 and 150 can include software therein (e.g., shown by way of example as the firmware 127 of the controller 125). In this regard, the controllers 125 and 150 can utilize a system memory and a processor, as described herein, to store and execute the firmware 127 for controlling, detecting, and sensing operations. The controllers 125 and 150 can manage power transfers for each coil pair (Tx coil 109 and Rx coil 110) individually via in-band communications or out-of-band communications. The controllers 125 and 150 can be utilized to perform computations required by the sensing circuits, circuitry, and/or software or any of the circuitry therein. The controllers 125 and 150 can control any part of the Tx 101 and the Rx 102, such as to provide modulation as needed for power transfer, as well as controlling, detecting, and sensing operations. According to one or more embodiments, the software can logically provide one or more of a FIR equalizer, an analyzer of in-band communication data, a selector for selecting a ping, a coupler for dynamically determining a coupling factor, a regulator for dynamically determining an operating frequency, etc. For example, the controller 150 can monitor voltage of the resonance circuit of the Rx 102, as well as AC currents, by measuring of voltage of resistive elements of the Rx 102.

The controllers 125 and 150 can communicate with any part of the Tx 101 and the Rx 102, such as by utilizing the I/O module 126 as an interface to transmit and/or receive information and instructions between the controller 125 and elements of the Tx 101 (e.g., such as the driver 120, the rectifier 130, and/or any wiring junction or resistor). For instance, the controller 125 can sense, through the I/O module 126 one or more currents or voltages, such as a AC input voltage (Vin) and a AC resonance circuit voltage (Vac). According to one or more embodiments, the controllers 125 and 150 can activate (e.g., through the I/O module 126) one or more switches to change the resonance frequency (as the Rx 102 and/or the Tx 101 can include multiple switches for multiple frequencies). According to one or more embodiments, the controller 125 of the Tx 101 can utilize the firmware 127 as a mechanism to operate and control operations of the Rx 102, and the controller 140 of the Rx 102 can utilize the firmware therein as a mechanism to operate and control operations of the Tx 101. In this regard, the controllers 125 and 150 can be a computerized component or a plurality of computerized components adapted to perform methods such as described herein.

According to one or more embodiments, the controller 140 of the Rx 102 can be connected to the Rx coils 110, the driver 140, and the rectifier 160. The controller 140 sets each of the one or more modules 115 to operate in a Rx mode or a TX mode, as needed, to control power transfer to and therefrom. The controller 140 also monitors (e.g., directly or via a battery management system) currents to/from each individual module 115 and communicates feedback or feedback information. The feedback information includes power adaptation requests to the Tx 101 (e.g., when the modules 115 operate in the Rx mode). The feedback information includes requests for increase or decrease of power current or voltage by a specific percentage. The feedback information includes information on target currents. The feedback information includes modification information that modifies operation points by changing frequency or duty cycle (when the modules 115 operate in the Tx mode), such as to achieve a target current for a specific battery module 115. For example, the feedback information can be provided to the controller 140 to operate the driver 140 to control a power transfer by frequency modulation, duty cycle modulation, or both. The feedback can include individual cell group current requirements, such as a 25 Volt cell group having a charge current of 200 Amps.

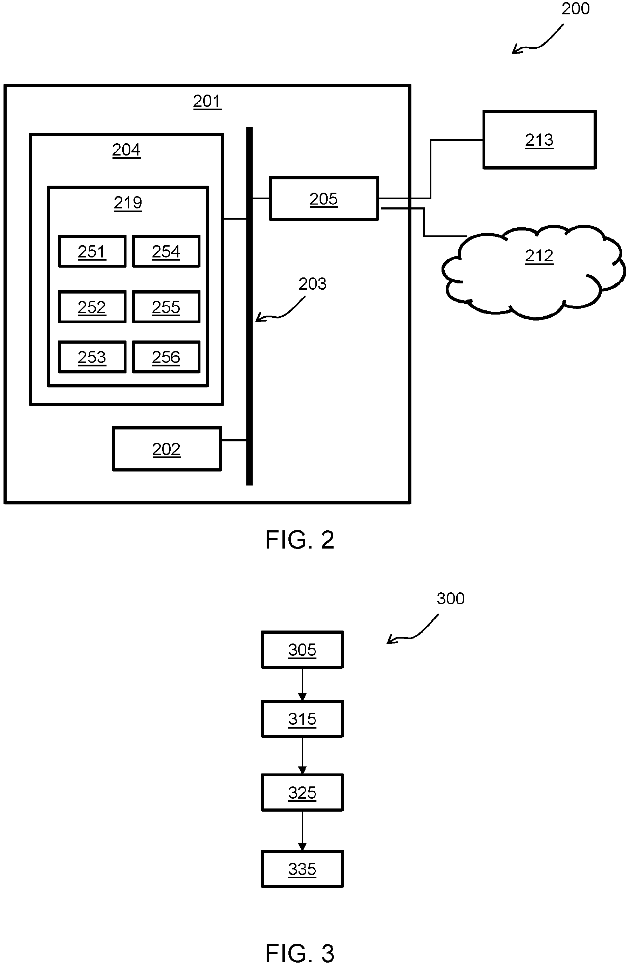

FIG. 2 depicts a system 200 in accordance with one or more embodiments. The system 200 has a device 201 (e.g., the Rx 102 and/or the Tx 101 of the system 100 of FIG. 1) with one or more central processing units (CPU(s)), which are collectively or generically referred to as processor(s) 202 (e.g., the controllers 125 and 140 of FIG. 1). The processors 202, also referred to as processing circuits, are coupled via a system bus 203 to system memory 204 and various other components. The system memory 204 can include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 201, and the RAM is read-write memory coupled to the system bus 203 for use by the processors 202.

FIG. 2 further depicts an adapter 205 coupled to the system bus 203. The adapter 205 may be a small computer system interface (SCSI) adapter that communicates with a drive and/or any other similar component. In one embodiment, the adapter 205 may be connected to one or more I/O buses that are connected to the system bus 203 via an intermediate bus bridge. Suitable I/O buses for connecting peripheral devices such as hard disk controllers, network adapters, and graphics adapters typically include common protocols, such as the Peripheral Component Interconnect (PCI). The adapter 205 may interconnect the system bus 203 with a network 212, which may be an outside network (power or otherwise), enabling the device 201 to communicate data and/or transfer power with other such devices (e.g., such as the Tx 101 connecting to the Rx 102). A display 213 (e.g., screen, a display monitor) is connected to the system bus 203 by the adapter 205, which may include a graphics controller to improve the performance of graphics intensive applications and a video controller. Additional input/output devices can be connected to the system bus 203 via the adapter 205 may, such as a mouse, a touch screen, a keypad, a camera, a speaker, etc.

The system memory 204 is an example of a computer readable storage medium, where software 219 can be stored as instructions for execution by the processor 202 to cause the device 201 to operate, such as is described herein with reference to FIGS. 3-4. In connection with FIG. 1, the software 219 can be representative of firmware 127 for the Tx 101 (as well as firmware of the controller 140), such that the memory 204 and the processor 202 (e.g., of the controller 125) logically provide operations 251, 252, 253, 245, 255, 256, etc. The software 219 can include one or more modes of operation, such as a Rx mode, a Tx mode, and a regenerative charging mode. According to one or more embodiments, the Rx mode includes when the EV 103 is parked, operating as Rx, and connected a wireless charger. According to one or more embodiments, the Tx mode includes when the EV 103 is operating as power source, powering accessories, or providing grid power transfer. According to one or more embodiments, the regenerative charging mode includes when the EV 103 is in moving and using battery power or driving power to the battery (i.e., a wireless power sub-system is used to perform balancing between the one or more modules 115). According to one or more embodiments, the software 219 and the processor 202, operating as the firmware of the controller 140, cause the Rx 102 of FIG. 1 to implement a charging process with optimum balanced charging with respect to operations 251, 252, 253, 245, 255, and 256 and/or the one or more modes of operation.

Regarding operation 251, the controller 150 of the Rx 102 can operate one or more Rx coils 110 as transmitters and one or more RX coils 110 as receivers. For instance, when the EV 103 is not being charged over the Tx 101, and when the EV 103 is discharged or charged via wired interface or regenerative energy harvesting, the controller 150 of the Rx 102 can operate one or more Rx coils 110 as transmitters and one or more RX coils 110 as receivers. The system 100, thus, enables the Rx 102 to perform a direct-current-to-direct-current (DC2DC) operation and pump a charge from one module 115 to another module 115.

According to one or more embodiments, the DC2DC operation and charge pumping can be used to perform module balancing during discharge and recharge processes. For example, when discharging, the Rx 102 for the one or more modules 115 with higher health/capacity (than other modules 115) can operate in a Tx mode. According to one or more embodiments of higher health/capacity, an example battery having sixteen (16) modules 115 where one of the modules 115 is "younger" than the others and, thus, has a higher capacity and a lower internal resistance when performing a discharge of the example battery (e.g., all sixteen modules are connected in series). Note that the "younger" module can operate in Tx mode, while the other modules can operate in Rx mode (e.g., to discharge some of an extra capacity of the "younger" module to assist the "older" modules to provide a necessary current).

Further, when discharging, the Rx 102 for the one or more modules 115 with lower health/capacity modules (than other modules 115) can operate in a Rx mode. According to one or more embodiments of lower health/capacity, health of an aging cell is sensed by an increase in internal resistance and lower capacity compared to a new cell. The increase in internal resistance and the lower capacity proportionally relates to a module 115 completing a number of charge/discharge cycles. For instance, if a module 115 is designed for 1000 such cycles, then a health of the module 115 degrades when as the module 115 approaches an expected maximal cycles. According to one or more embodiments, transmitters (as Tx 101) can be operated to drive current from the better modules 115 to the lower health modules 11, while all modules 115 are all modules 115 are being discharged serially to motors and systems of the EV 103.

Regarding operation 252, when operating in the regenerative charging mode, the lower health/capacity modules 115 are operated as transmitters and drive access current to higher health/capacity modules 115, while all modules 115 are all charged serially. By way of example, a battery with ten (10) 25 Volt modules 115 has an internal capacity of "new" cell, e.g., at approximately 5 kilowatt hours or kWh). Degraded modules 115 therein decrease to 4 kilowatt or kW. Further, the EV 103 includes ten (10) "old" modules 115 and two (2) new modules 115. If all modules 115 are discharged serially (as is conventionally done), then the discharge is be limited to a lowest cell capacity of 4 kW * 10 = 40 kWh. In contrast, using the system 100, the two (2) "new" modules 115 can operate in a Tx mode and send extra power to the "old" modules 115 to assist. In turn, a discharge can occur at fixed current of 50 Amps, while the "new" cells transfer current via the wireless Tx to four (4) Rx coils. The current being 10 Amps from each of the "new" modules, and each of the "older" module receiving, e.g., approximately 2.5 Amps. The overall current draws from "new" modules being 60 Amps and from "older" ones being 50 Amps - 2.5 Amps = 47.5 Amps. Thus, the battery is depleted after 3.33 hours, and the capacity achieved is 50 Amps * 3.33 hours * 25 Volts = 41.66 kWh.

Regarding operation 253, feedback information can be exchanged between the Rx 102 and the Tx 101. The feedback information can include modification information that modifies operation points of the frequency or the duty cycle to control a power transfer. For example, the modification information includes alternative operation points that the controller 140 sends as commands to the driver 140 to implement frequency modulation, duty cycle modulation, or both (e.g., when the modules 115 operate in the Tx mode) to achieve a target current for a specific battery module 115. By way of example, the target current can be a balance of a few amps therebetween. The target current for each of the modules 115 can be determined by analysis of measured voltages and currents. According to one or more embodiments, a resistance of a module 115 can be derived (e.g., by a controller on each module 115) and used to evaluate battery health and determine the target current of the module 115. Battery health can be defined by one or more parameters, such as an internal battery resistance, an actual capacity of the battery, an number of charge/discharge cycles, and a temperature to which the module 115 has been exposed during charge/discharge cycles. According to one or more embodiments historical data, which include data relative to usage and charge cycles of each module 115, can also be used in determining the target charge current for the individual modules 115. The historical data can also include, but is not limited to, charging and discharge cycles, duration and currents, and temperatures.

Regarding operation 254, with respect to cell balancing of any module 115, the system 100 can assist the one or more modules 115. For example, the module 115 can drive a charging current that includes both DC and AC components. The DC current can be a main charging current, while the AC current can be used to enable balancing between the cells of the module 115. Each cell of the module can include a connected circuit that enables rectified AC current at specific frequency to be driven to the cell. The frequencies for each of the cells for group of cells can different, such that corresponding filters in each cell/group of cells filter a current that belongs to that cell/group of cells without being affected by AC on an adjacent frequency.

Regarding operation 255, the controller 150 monitors (e.g., directly or via the battery management system) voltage levels and health of each individual cell in each module 115. The controller 150 can create a charging current waveform that includes current boosts for specific cells based on the AC waveform spectral content. By way of example, voltage for each serial point of a module 115 including ninety-six (96) cells arranged as 6S16P configuration can be monitored. The controller 150 can establish a second serial group of the module 115, which has a larger capacity than other groups (e.g., five (5) other cell groups). A circuit of the second serial group can be tuned to 17khz. The controller 115 can initiate a charging current signal that has 5A of DC plus a 1A RMS 17khz signal. The circuit of the second serial group would therefore be charged at higher currents then other groups.

Regarding operation 256, a combined AC and DC waveform can be generated by the module 115 operating with the Rx 102 by controlling output. The combined AC and DC waveform can also be created by the Tx 101 that is coupled to the Rx 102. The Tx 101 can create the combined AC and DC waveform based on feedback information provided by the Rx 102, such as individual cell groups current requirements. According to one or more embodiments, the circuit for AC current is completely passive.

According to one or more embodiments, an output of the one or more Rx modules 115 can be connected to selectively charge one of the modules 115 or a full battery pack. For example, a configuration can include matching multiple Tx coils 109 to one of the Rx coils 110. Another configuration can include when the EV 103 is docked over a standard single coil charger that is designed to charge a full pack. Further, when the system 100 is operating when the EV 103 is docked, balancing can occur by charge current being transferred via the other Rx coils 110 (when some are operating as transmitters).

According to one or more embodiments, the system 100 and elements therein can include ferrite or conductive material. For instance, the ferrite or conductive material can be part of the Tx 101 design. Further, the ferrite or conductive material can below, in, or surrounding the individual Tx coils 109. Furthermore, the ferrite or conductive material can be part of the Rx coils 110 (to achieve the targets discussed herein).

FIG. 3 depicts a method 300 in accordance with one or more embodiments. The method 300 is an example of the charging process in which the optimum balanced charging can be implemented. The method 300 begins when, at block 305, the EV 103 is driven over top of the Tx 101. At block 315, the Tx 101 and the Rx 102 are aligned. At block 325, a coupling is achieved between the Tx 101 and the Rx 102. For example, one or more Tx coil 109 pairs couple with one or more Rx coil 110 pairs. According to one or more embodiments, each of the Rx coils 102 can be wired to a separate module 115. At block 335, the system 100 implements power transfer from the Tx 101 to the Rx 102, which further supplies power to the modules 115. According to one or more embodiments, the power transfer can include the optimum balanced charging as described herein, and control over the power transfer can be performed for each coil pair individually via in-band communications or out-of-band communications, which may originate from the controllers 125 and 150.

According to one or more embodiments, a system is provided. The systems include one or more modules of an electric vehicle and a power receiver of the electric vehicle. The power receiver includes one or more receiving coils and a controller. Each of the one or more receiving coils directly and separately connects to a separate one of the one or more modules. The controller is configured to monitor currents to and from each of the one or more modules and modifies operation points of each of the one or more modules by changing frequency or duty cycle to achieve a target current.

According to one or more embodiments or any of the system embodiments herein, the controller can monitor the currents directly or via a battery management system.

According to one or more embodiments or any of the system embodiments herein, the controller can communicate feedback information to a power transmitter based on operations of the one or more modules and the one or more receiving coils.

According to one or more embodiments or any of the system embodiments herein, the feedback information can include a request for increase or decrease of power current or voltage by a specific percentage.

According to one or more embodiments or any of the system embodiments herein, the controller can operate in a receiver mode, a transmitter mode, and a regenerative charging mode.

According to one or more embodiments or any of the system embodiments herein, the receiver mode can include when the electric vehicle is parked, operating as a receiver, and connected a charging station.

According to one or more embodiments or any of the system embodiments herein, the transmitter mode can include when the electric vehicle is operating as power source, powering accessories, or providing grid power transfer.

According to one or more embodiments or any of the system embodiments herein, the controller can operate at least one of the one or more receiving coils as a transmitter and a remaining ones of the one or more receiving coils as receives to implement balance charging.

According to one or more embodiments or any of the system embodiments herein, the power receiver can execute a direct-current-to-direct-current operation and pumps a charge from a first coil of the one or more receiving coils to a second coil of the one or more receiving coils.

According to one or more embodiments or any of the system embodiments herein, the system can include a power transmitter of a charging station for the electric vehicle and a controller. The power transmitter can include one or more transmitting coils configured to generate electromagnetic energy to provide inductive power to the one or more receiving coils. The controller is configured to monitor currents of the one or more transmitting coils.

According to one or more embodiments, a system is provided. The system includes an electric vehicle. The electric vehicle includes one or more modules and a power receiver. The power receiver includes one or more receiving coils. Each of the one or more receiving coils directly and separately connected to a separate one of the one or more modules. The power receiver includes a controller. The controller is configured to monitor currents to and from each of the one or more modules and modifies operation points of each of the one or more modules by changing frequency or duty cycle to achieve a target current. The system includes a charging station. The charging station comprising a power transmitter configured to generate electromagnetic energy to provide inductive power to the one or more receiving coils.

According to one or more embodiments or any of the system embodiments herein, the controller can monitor the currents directly or via a battery management system.

According to one or more embodiments or any of the system embodiments herein, the controller can communicate feedback information to the power transmitter based on operations of the one or more modules and the one or more receiving coils.

According to one or more embodiments or any of the system embodiments herein, the feedback information can include a request for increase or decrease of power current or voltage by a specific percentage.

According to one or more embodiments or any of the system embodiments herein, the controller can operate in a receiver mode, a transmitter mode, and a regenerative charging mode.

According to one or more embodiments or any of the system embodiments herein, the receiver mode can include when the electric vehicle is parked, operating as a receiver, and connected the charging station.

According to one or more embodiments or any of the system embodiments herein, the transmitter mode can include when the electric vehicle is operating as power source, powering accessories, or providing grid power transfer.

According to one or more embodiments or any of the system embodiments herein, the controller can operate at least one of the one or more receiving coils as a transmitter and a remaining ones of the one or more receiving coils as receives to implement balance charging.

According to one or more embodiments or any of the system embodiments herein, the power receiver can execute a direct-current-to-direct-current operation and pumps a charge from a first coil of the one or more receiving coils to a second coil of the one or more receiving coils.

According to one or more embodiments or any of the system embodiments herein, the power transmitter can include one or more transmitting coils configured to generate the electromagnetic energy to provide the inductive power to the one or more receiving coils. The power transmitter can also include a controller configured to monitor currents of the one or more transmitting coils.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A system comprising:
one or more modules of an electric vehicle;
a power receiver of the electric vehicle comprising:
one or more receiving coils, each of the one or more receiving coils directly and separately connected to a separate one of the one or more modules; and
a controller configured to monitor currents to and from each of the one or more modules and modifies operation points of each of the one or more modules by changing frequency or duty cycle to achieve a target current.

2. The system of claim 1, wherein the controller monitors the currents directly or via a battery management system.

3. The system of claim 1 or 2, wherein the controller communicates feedback information to a power transmitter based on operations of the one or more modules and the one or more receiving coils.

4. The system of claim 3, wherein the feedback information comprises a request for increase or decrease of power current or voltage by a specific percentage.

5. The system of any of the preceding claims, wherein the controller operates in a receiver mode, a transmitter mode, and a regenerative charging mode.

6. The system of claim 5, wherein the receiver mode comprises when the electric vehicle is parked, operating as a receiver, and connected a charging station.

7. The system of claim 5 or 6, wherein the transmitter mode comprises when the electric vehicle is operating as power source, powering accessories, or providing grid power transfer.

8. The system of any of the preceding claims, wherein the controller operates at least one of the one or more receiving coils as a transmitter and a remaining ones of the one or more receiving coils as receives to implement balance charging.

9. The system of any of the preceding claims, wherein the power receiver executes a direct-current-to-direct-current operation and pumps a charge from a first coil of the one or more receiving coils to a second coil of the one or more receiving coils.

10. The system of any of the preceding claims, comprising:
a power transmitter of a charging station for the electric vehicle comprising:
one or more transmitting coils configured to generate electromagnetic energy to provide inductive power to the one or more receiving coils; and
a controller configured to monitor currents of the one or more transmitting coils.

11. A system comprising:
an electric vehicle comprising one or more modules and a power receiver, the power receiver comprising:
one or more receiving coils, each of the one or more receiving coils directly and separately connected to a separate one of the one or more modules; and
a controller configured to monitor currents to and from each of the one or more modules and modifies operation points of each of the one or more modules by changing frequency or duty cycle to achieve a target current; and
a charging station comprising a power transmitter configured to generate electromagnetic energy to provide inductive power to the one or more receiving coils.

12. The system of claim 11, wherein the controller monitors the currents directly or via a battery management system.

13. The system of claim 11 or 12, wherein the controller communicates feedback information to the power transmitter based on operations of the one or more modules and the one or more receiving coils.

14. The system of claim 13, wherein the feedback information comprises a request for increase or decrease of power current or voltage by a specific percentage.

15. The system of an of the preceding claims 11 to 14, wherein the controller operates in a receiver mode, a transmitter mode, and a regenerative charging mode.

16. The system of claim 15, wherein the receiver mode comprises when the electric vehicle is parked, operating as a receiver, and connected the charging station.

17. The system of claim 15 or 16, wherein the transmitter mode comprises when the electric vehicle is operating as power source, powering accessories, or providing grid power transfer.

18. The system of any of the preceding claims 11 to 17, wherein the controller operates at least one of the one or more receiving coils as a transmitter and a remaining ones of the one or more receiving coils as receives to implement balance charging.

19. The system of any of the preceding claims 11 to 18, wherein the power receiver executes a direct-current-to-direct-current operation and pumps a charge from a first coil of the one or more receiving coils to a second coil of the one or more receiving coils.

20. The system of any of the preceding claims 11 to 19, wherein the power transmitter comprises:
one or more transmitting coils configured to generate the electromagnetic energy to provide the inductive power to the one or more receiving coils; and
a controller configured to monitor currents of the one or more transmitting coils.

## Amended claims

### Amended claims in accordance with Rule 137(2) EPC.

1. A system comprising:
one or more modules of an electric vehicle;
a power receiver of the electric vehicle comprising:
one or more receiving coils, each of the one or more receiving coils directly and separately connected to a separate one of the one or more modules; and
a controller configured to monitor currents to and from each of the one or more modules and modifies operation points of each of the one or more modules by changing frequency or duty cycle to achieve a target current.

2. The system of claim 1, wherein the controller monitors the currents directly or via a battery management system.

3. The system of claim 1 or 2, wherein the controller communicates feedback information to a power transmitter based on operations of the one or more modules and the one or more receiving coils.

4. The system of claim 3, wherein the feedback information comprises a request for increase or decrease of power current or voltage by a specific percentage.

5. The system of any of the preceding claims, wherein the controller operates in a receiver mode, a transmitter mode, and a regenerative charging mode.

6. The system of claim 5, wherein the receiver mode comprises when the electric vehicle is parked, operating as a receiver, and connected a charging station.

7. The system of claim 5 or 6, wherein the transmitter mode comprises when the electric vehicle is operating as power source, powering accessories, or providing grid power transfer.

8. The system of any of the preceding claims, wherein the controller operates at least one of the one or more receiving coils as a transmitter and a remaining ones of the one or more receiving coils as receives to implement balance charging.

9. The system of any of the preceding claims, wherein the power receiver executes a direct-current-to-direct-current operation and pumps a charge from a first coil of the one or more receiving coils to a second coil of the one or more receiving coils.

10. The system of any of the preceding claims, comprising:
a power transmitter of a charging station for the electric vehicle comprising:
one or more transmitting coils configured to generate electromagnetic energy to provide inductive power to the one or more receiving coils; and
a controller configured to monitor currents of the one or more transmitting coils.

11. A system comprising the system according to any one of the claims 1 to 10 and a vehicle.
